# EUROPÄISCHE PATENTSCHRIFT

(11) **EP 1 855 030 B1**
(45) Veröffentlichungstag und Bekanntmachung des Hinweises auf die Patenterteilung: **31.03.2010**
(21) Anmeldenummer: 07009236.6
(22) Anmeldetag: 08.05.2007
(51) Int. Cl.: F16H 57/04

(54) **Fluidausgleichsbehälter und damit ausgestattetes Getriebe**
Expansion tank and gearbox with such a tank
Vase d'expansion et boîte de vitesses avec une telle vase

(30) Priorität: 12.05.2006 DE 102006022964
(43) Veröffentlichungstag der Anmeldung: 14.11.2007
(73) Patentinhaber: GETRAG Getriebe- und Zahnradfabrik Hermann Hagenmeyer GmbH & Cie KG, 74199 Untergruppenbach (DE)
(72) Erfinder: Edelmann, Martin, 74369 Löchgau (DE)
(74) Vertreter: Steil, Christian

(56) Entgegenhaltungen:
- WO-A-02/10636
- DE-A1- 3 544 724
- DE-C1- 4 014 955
- GB-A- 1 214 782
- US-A- 5 301 642

## Beschreibung

Die vorliegende Erfindung betrifft einen Fluidausgleichsbehälter zur Anordnung in einem Gehäuse eines Getriebes, wobei der Fluidausgleichsbehälter wenigstens einen Fluideingang zur Aufnahme von Fluid in den Fluidausgleichsbehälter und wenigstens einen Fluidausgang zur Abgabe von Fluid aufweist, wobei der Fluideingang größer ist als der Fluidausgang, so dass der Fluidausgleichsbehälter im Normalbetrieb gefüllt ist, um das Fluidniveau in dem Gehäuse zu senken, wobei an dem Fluideingang von der Viskosität des Fluides abhängige Durchflussbegrenzungsmittel angeordnet sind, die den Durchfluss von Fluid in den Fluidausgleichsbehälter hinein begrenzen, so dass das Fluidniveau weniger abgesenkt wird, wenn die Viskosität des Fluides einen bestimmten Grenzwert überschreitet.

Ferner betrifft die vorliegende Erfindung ein Getriebe für Kraftfahrzeuge, mit einem Gehäuse, wenigstens einem in dem Gehäuse beweglich gelagerten Getriebeglied und einem Fluidausgleichsbehälter, wobei das Gehäuse zur Aufnahme von Schmierfluid ausgelegt ist, das am Boden des Gehäuses einen Fluidsumpf bildet, wobei im Normalbetrieb des Getriebes ein Teil des Fluides über einen Fluideingang in dem Fluidausgleichsbehälter aufgenommen wird, um das Fluidniveau des Fluidsumpfes abzusenken und hierdurch Planschverluste zu verringern.

Ein derartiger Fluidausgleichsbehälter bzw. ein solches Kraftfahrzeuggetriebe sind aus dem Dokument DE 103 08 560 A1 bekannt.

Das Dokument DE 103 08 560 A1 offenbart ein Kraftfahrzeuggetriebe mit einem Gehäuse, innerhalb dessen ein Behälter angeordnet ist, der als Ölausgleichsbehälter dient. Aufgrund der Tauchschmierung hochgeschleudertes Öl wird in dem oben offenen Behälter aufgenommen, so dass der Pegel des Ölsumpfes sinkt. Dies verringert die Planschverluste.

Aus dem Dokument DE 100 37 856 A1 ist ein Ölbehälter für ein einspritzgeschmiertes Automatikgetriebe bekannt, der eine Einlauföffnung und eine Auslauföffnung zur selbsttätigen Aufnahme und Abgabe von ATF-Ö1 aufweist. Die Öffnungen sind so ausgebildet, dass ein Aufnahmevolumenstrom stets größer ist als ein Abgabevolumenstrom.

Ein tauchgeschmiertes Wechselgetriebe in Vorgelegebauweise ist aus dem Dokument DE 33 34 411 C1 bekannt, wobei ein seitlicher Ölausgleichsbehälter durch eine Trennwand abgegrenzt ist, die innerhalb des Gehäuses festgelegt ist. Die Trennwand ist in ihrem Verlauf an die unterschiedlichen Durchmesser der Zahnkränze bzw. Wellenabschnitte angepasst. Hierdurch soll Schmieröl, das bei kalter Umgebung in Form eines zähen dicken Schmierölmantels mitgenommen wird, durch eine eng an dem Zahnkranz anliegende Kante der Trennwand abgeschnitten werden und sich in dem Stauraum sammeln. Hierdurch soll ein Abbremsen des Radsatzes augrund des kalten Öls verringert werden, da dies bei Schaltvorgängen zu Schaltgeräuschen führen kann.

Die DE 103 59 505 A1 offenbart ein tauchgeschmiertes Getriebe mit einem Gehäuse, das teilweise mit Öl befüllt ist. In dem Getriebegehäuse ist ferner ein Dehnkörper angeordnet, der sich bei Erwärmung des Getriebes ausdehnt und entsprechend den Ölpegel beeinflusst. Planschverluste im kalten Zustand werden verringert, da die Zahnräder weniger tief in den Ölsumpf eintauchen als bei warmem Getriebe.

Ferner zeigt das Dokument DE-OS 1 801 917 ein tauchgeschmiertes Ausgleichsgetriebe mit einem seitlichen Ölausgleichsbehälter. Dieser nimmt Öl im Betrieb auf, um den Ölpegel im Betrieb zu senken und folglich die Planschverluste zu verringern.

Ein weiteres tauchgeschmiertes Wechselgetriebe ist aus der DE 199 16 377 A1 bekannt. Hier ist um ein Rad herum eine Schottwand angeordnet, die einen Beölungsraum um das Rad herum definiert. Im Betrieb wird Öl aus dem Beölungsraum herausgeschleudert. Hierdurch sollen Planschverluste vermieden werden.

Eine weitere Vorrichtung zur Ölpegelregulierung eines Wechselgetriebes ist aus der DE-PS 32 08 100 bekannt.

Aus der DE 35 44 724 A1 ist eine Behälteranordnung für eine Betriebsflüssigkeit einer Brennkraftmaschine eines Fahrzeugs bekannt, die im Betrieb Kippbewegungen um horizontale Achsen ausführt, mit zwei mindestens annähernd in gleicher Höhe angeordneten Behältern, von denen ein erster Behälter mit der Saugseite einer zur Brennkraftmaschine liefernden Pumpe verbunden ist, während der zweite Behälter als Vorratsbehälter bodennah mit dem ersten Behälter verbunden ist, und in die oben eine Entlüftungsleitung einmündet, wobei nur der erste Behälter mit der Atmosphäre in Verbindung steht und die Entlüftungsleitung in ihn zumindest nahe seiner dem Vorratsbehälter abgekehrten Seite einmündet.

Aus der GB 1 214 782 ist eine Schmiereinrichtung für Getriebe mit einem Schmierstoffvorratsbehälter bekannt, wobei Schmierstoffversorgungsmittel mit dem Vorratsbehälter in Verbindung stehen, um Schmierstoff an die zu schmierenden Teile zu liefern und wobei Schmierstoffrückführungsmittel mit dem Vorratsbehälter in Verbindung stehen, um Schmierstoff von den zu schmierenden Teilen an dem Vorratsbehälter zurückzuführen, wobei die Versorgungsmittel Messmittel aufweisen, die eine geringere Durchflusskapazität aufweisen als die Rückführungsmittel.

Aus der US 5,301,642 A ist eine Vorrichtung zur Unterstützung der Erwärmung von Verbrennungsmaschinen bekannt, wobei eine Ölwanne mit einem Teilerelement bereitgestellt ist, um diese so in eine Hauptkammer und eine Vorkammer zu teilen. Eine vertikale Wand des Teilungselementes ist an einem unteren Abschnitt mit ersten Löchern in der Nähe einer Öffnung eines Entnahmerohrs einer Ölpumpe und an einem oberen Abschnitt mit zweiten Löchern in der Nähe eines Ölniveaus bereitgestellt. In einem Zustand des Aufwärmens nach dem Start kann das Öl in der Vorkammer, da die Öltemperatur niedrig und die Viskosität des Öls hoch ist, nicht durch die ersten Löcher hindurchfließen. Entsprechend zirkuliert nur das Öl in der Hauptkammer, dessen Menge gering ist, mittels der Ölpumpe durch den Motor, wodurch der Motor schnell aufgewärmt wird. Öl mit einer niedrigen Temperatur in der Vorkammer wird allmählich mit dem Öl in der Hauptkammer durch die zweiten Löcher hindurch ausgetauscht, so dass die Temperatur dessen kontinuierlich ansteigt. Wenn die Viskosität des Öls reduziert wird durch Erhöhen der Temperatur des Öls, zirkuliert das Öl der Vorkammer zu gegebener Zeit mittels der Ölpumpe durch den Motor.

Vor diesem Hintergrund ist es die Aufgabe der Erfindung, einen verbesserten Fluidausgleichsbehälter und ein Wechselgetriebe für Kraftfahrzeuge anzugeben, das mit einem Fluidausgleichsbehälter ausgestattet ist, insbesondere in Verbindung mit einer Einspritzschmierung des Wechselgetriebes.

Diese Aufgabe wird bei dem eingangs genannten Fluidausgleichsbehälter dadurch gelöst, dass die Durchflussbegrenzungsmittel einen der Fluideingang überdeckenden Träger aufweist, in dem eine Vielzahl von Löchern ausgebildet ist.

Die obige Aufgabe wird ferner durch ein Kraftfahrzeuggetriebe gelöst, wie eingangs erwähnt, das mit einem Fluidausgleichsbehälter erfindungsgemäßer Art ausgestattet ist.

Durch die Wahl der Form und der Größe der Löcher sowie des Verhältnisses der Lochfläche zu der Trägerfläche kann generell erreicht werden, dass Fluid hoher Viskosität abgewiesen wird, d.h. nicht durch die Löcher hindurchtritt. Fluid niedriger Viskosität kann hingegen nahezu ungehindert durch die Löcher hindurchtreten.

Damit kann ein solcher gelochter Träger Durchflussbegrenzungsmittel bilden.

Der Vorteil hierbei ist, dass solche Durchflussbegrenzungsmittel rein passiv arbeiten und keine aktive Ansteuerung oder Ähnliches erfordern.

Die Aufgabe wird somit vollkommen gelöst.

Von besonderem Vorteil ist es, wenn das Verhältnis der Durchflussmengen pro Zeiteinheit bei normaler Viskosität des Fluides im Normalbetrieb bzw. bei Überschreiten des Grenzwertes größer als 10:1, insbesondere größer.als 100:1 ist.

Mit anderen Worten sollen die Durchflussbegrenzungsmittel so ausgelegt werden, dass bei Überschreiten des Grenzwertes signifikant weniger Fluid in den Fluidausgleichsbehälter gelangt. Hierdurch kann ein bestimmtes minimales Fluidniveau immer aufrechterhalten werden.

Ferner ist es vorteilhaft, wenn die Durchflussbegrenzungsmittel und das verwendete Fluid so aneinander angepasst sind, dass der Durchfluss von Fluid in den Fluidausgleichsbehälter hinein bei Überschreiten des Grenzwertes auf Null oder nahezu Null begrenzt ist.

Bevorzugt sind die Durchflussbegrenzungsmittel also dazu in der Lage, die Aufnahme von Fluid hoher Viskosität vollständig bzw. nahezu vollständig abzuweisen.

Sobald die Viskosität auf ein sinnvolles Maß abgesenkt ist, kann das Fluid in dem Fluidausgleichsbehälter wieder aufgenommen werden. In diesem Fall fließt das Fluid von den Schmierstellen auch schnell wieder in den Fluidsumpf zurück, so dass ein gewisses Grundniveau des Fluidsumpfes nicht unterschritten wird.

Der zu wählende Grenzwert der Viskosität des Fluides hängt von einer Reihe von Umständen ab. Zum einen hängt der Grenzwert von der Art des verwendeten Fluides ab, also davon, ob es sich von Haus aus um ein hochviskoses oder eher ein niedrigviskoses Fluid handelt. Zum anderen hängt der Grenzwert von dem Verhältnis der Querschnittsöffnungen des Fluideingangs und des Fluidausgangs ab, und gegebenenfalls davon, in welchen Umgebungen das Fahrzeug eingesetzt wird. Da es bei einem Betrieb eines Fahrzeuges in sehr kalten Umgebungen relativ lange dauern kann, bis sich das Getriebefluid hinreichend erwärmt hat, kann der geplante Einsatzzweck des Kraftfahrzeuges hier auch eine Rolle spielen.

Generell ist jedoch auch denkbar, an dem Fluideingang einen aktuatorisch betätigten Verschluss vorzusehen, der in Abhängigkeit von der Temperatur des Fluides (oder unmittelbar in Abhängigkeit von der Viskosität des Fluides) geöffnet bzw. geschlossen wird.

Von besonderem Vorteil ist es, wenn die Durchflussbegrenzungsmittel ein Gitter aufweisen, dessen Maschen die Löcher bilden.

Ein solches Gitter ist zum eine kostengünstig verfügbar, auch in unterschiedlichen Maschenweiten, Stegbreiten etc. Daher lässt sich durch Wahl eines geeigneten Gitters ein vernünftiger Viskositätsgrenzwert festlegen, oberhalb dessen das Gitter keines oder einen deutlich geringeren Durchfluss zulässt.

Hierbei ist es von besonderem Vorteil, wenn das Gitter als Drahtgitter ausgebildet ist, wobei die Dicke des Drahtes im Bereich von 0,05 mm bis 3 mm liegt, insbesondere im Bereich von 0,1 bis 1 mm.

Derartige Drahtgitter sind besonders geeignet für die Fluide, die in Kraftfahrzeuggetrieben verwendet werden.

Ferner ist es vorteilhaft, wenn die Löcher eine Größe im Bereich von 0,1 mm² bis 4 mm², insbesondere im Bereich von 0,4 mm² bis 2 mm² aufweisen.

Es hat sich ebenfalls gezeigt, dass Löcher dieser Größe dazu geeignet sind, für die in Kraftfahrzeuggetrieben verwendeten Fluide bei hohen Viskositäten eine hohe Durchflusssperrwirkung zu erzielen, bei niedrigen Viskositäten hingegen einen nahezu freien Durchfluss ermöglichen.

Ferner ist es vorteilhaft, wenn die Summe der Querschnittsflächen der Löcher wenigstens 10-fach, insbesondere wenigstens 100-fach größer ist als die Querschnittsfläche des Fluidausgangs.

Bei einem großflächigen Fluideingang ist es möglich, den Fluidausgleichsbehälter so anzuordnen, dass er alleine durch hochgeschleudertes Fluid befüllt wird.

Mit anderen Worten wird bei einem solchen Querschnittsflächenverhältnis erreicht, dass im Normalbetrieb (d.h. bei betriebswarmem Getriebe) immer eine deutlich höhere Menge in den Fluideingang eintritt als über den Fluidausgang austreten kann.

Hierdurch kann erreicht werden, dass der Fluidausgleichsbehälter im Normalbetrieb ständig gefüllt ist.

An dem Fluidausgleichsbehälter können gegebenenfalls Überlaufkanäle vorgesehen sein, um zu verhindern, dass Fluid durch den Fluideingang zurück fließt.

Ferner ist es vorteilhaft, wenn die Querschnittsflächen des Fluideingangs im Bereich von 100 mm² bis 2000 mm² liegt.

Eine solche Querschnittsfläche ist beispielsweise vorteilhaft, wenn der Fluideingang sich über die Breite von zwei Radsätzen eines Wechselgetriebes in Vorgelegebauweise erstrecken soll.

Es versteht sich, dass auch mehrere Fluidausgleichsbehälter in einem Getriebegehäuse angeordnet werden können, die jeweils die oben genannten Abmessungen besitzen.

Ferner ist es bevorzugt, wenn die Querschnittsfläche des Fluidausgangs im Bereich von 0,25 mm² bis 25 mm² liegt, insbesondere im Bereich von 0,5 mm² bis 5 mm².

Es hat sich gezeigt, dass Fluidausgänge dieser Abmessungen hinreichend groß sind, um einen adäquaten Rückfluss aus einem gefüllten Fluidbehälter bei normalen Betriebsbedingungen zu ermöglichen.

Daher kann sich der Fluidausgleichsbehälter bei Stillstand des Getriebes sicher entleeren, selbst bei vergleichsweise niedrigen Umgebungstemperaturen.

Gemäß einer weiteren bevorzugten Ausführungsform ist der Fluidausgleichsbehälter aus Kunststoff hergestellt.

Auf diese Weise kann der Fluidausgleichsbehälter kostengünstig und mit geringem Gewicht hergestellt werden.

Von besonderem Vorteil ist es, wenn der Fluidausgleichsbehälter wenigstens zwei Teile aufweist, die ohne eine separate Dichtung dazwischen mechanisch miteinander verbunden sind.

Auf diese Weise kann der Fluidausgleichsbehälter mit wenigen Bauteilen (im Idealfall nur zwei Bauteile sowie gegebenenfalls die Durchflussbegrenzungsmittel) aufgebaut werden, so dass der Fluidausgleichsbehälter kostengünstig herstellbar ist.

Da der Fluidausgleichsbehälter vorzugsweise vollständig in dem Getriebe aufgenommen ist, das ohnehin als fluiddichter Raum ausgebildet ist, kann auf eine separate Dichtung verzichtet werden.

Zudem muss ein Fluidausgleichsbehälter der genannten Art aufgrund des ständigen Zuführens von Fluid während des Normalbetriebs nicht vollständig dicht sein. Mit anderen Worten kann ein gewisses Lecken an den Schnittstellen der zwei Behälterteile durchaus zulässig sein. Dies kann bei der Berechnung des Fluidausgangs dann entsprechend berücksichtigt werden.

Bei dem erfindungsgemäßen Getriebe ist es von besonderem Vorteil, wenn das Getriebeteil über eine Spritzschmiereinrichtung geschmiert ist, die Fluid aus dem Fluidsumpf ansaugt und über eine Pumpe dem Getriebeteil zuführt.

Insbesondere bei spritzgeschmierten Getrieben kommt der erfindungsgemäße Fluidausgleichsbehälter zu besonderer Geltung, da durch ihn auch bei niedrigen Temperaturen (hoher Viskosität des Fluides) gewährleistet werden kann, dass der Fluidsumpf nicht trocken gepumpt wird.

Denn das Ansaugen von Luft würde zu einem Zusammenbrechen des Öldruckes und zu einem Ausfall der Schmierung führen. Bei schnelllaufenden und/oder hoch belasteten Getrieben könnte dies ernsthafte Folgen haben.

Insgesamt wird mit dem erfindungsgemäßen Fluidausgleichsbehälter erreicht, dass ein damit ausgestattetes Getriebe im Normalbetrieb mit geringen Planschverlusten arbeiten kann. Dadurch wird ein hoher Wirkungsgrad erzielt. Unerwünschte Ölverschäumungen werden vermieden.

Zum anderen kann bei niedrigen Temperaturen verhindert werden, dass unzulässigerweise Luft von einer Schmiereinrichtung angesaugt wird oder die Schmierung ausfällt, da ein Radsatz nicht mehr in das Fluid eintaucht.

Der erfindungsgemäße Fluidausgleichsbehälter lässt sich kostengünstig herstellen und kommt vorzugsweise ohne sonstige Steuermittel aus, sowie ohne Ventile oder Ähnliches.

Der Fluidausgleichsbehälter lässt sich zudem vorzugsweise auf einfache Weise an das für einen jeweiligen Getriebetyp zu verwendende Getriebefluid anpassen.

Obgleich dies weiter oben nicht ausdrücklich erwähnt ist, versteht es sich, dass die Durchflussbegrenzungsmittel im Wesentlichen von der Viskosität abhängen, die bei den üblicherweise verwendeten Getriebefluiden in starkem Maße von der Temperatur abhängt.

Daher sind die Durchflussbegrenzungsmittel in der Regel auch von der Temperatur des Fluides abhängig.

Vorzugsweise wird gewährleistet, dass der Fluidausgleichsbehälter bei Stillstand des Getriebes bis auf das Normalölniveau des Getriebesumpfes leerläuft.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische perspektivische Ansicht eines Teiles eines erfindungsgemäßen Getriebes, das mit einem erfindungsgemäßen Fluidausgleichsbehälter ausgestattet ist;
- Fig. 2: eine Seitenansicht eines Fluidausgleichsbehälters gemäß einer weiteren Ausführungsform der Erfindung;
- Fig. 3: eine Vorderansicht des Fluidausgleichsbehälters der Fig. 2;
- Fig. 4: in schematischer Form Durchflussbegrenzungsmittel zur Verwendung mit einem erfindungsgemäßen Fluidausgleichsbehälter;
- Fig. 5: eine weitere Ausführungsform von Durchflussbegrenzungsmitteln zur Verwendung in einem erfindungsgemäßen Fluidausgleichsbehälter; und
- Fig. 6: ein Viskositäts-Temperatur-Diagramm eines vorzugsweise in Verbindung mit dem erfindungsgemäßen Fluidausgleichsbehälter verwendeten Getriebefluides.

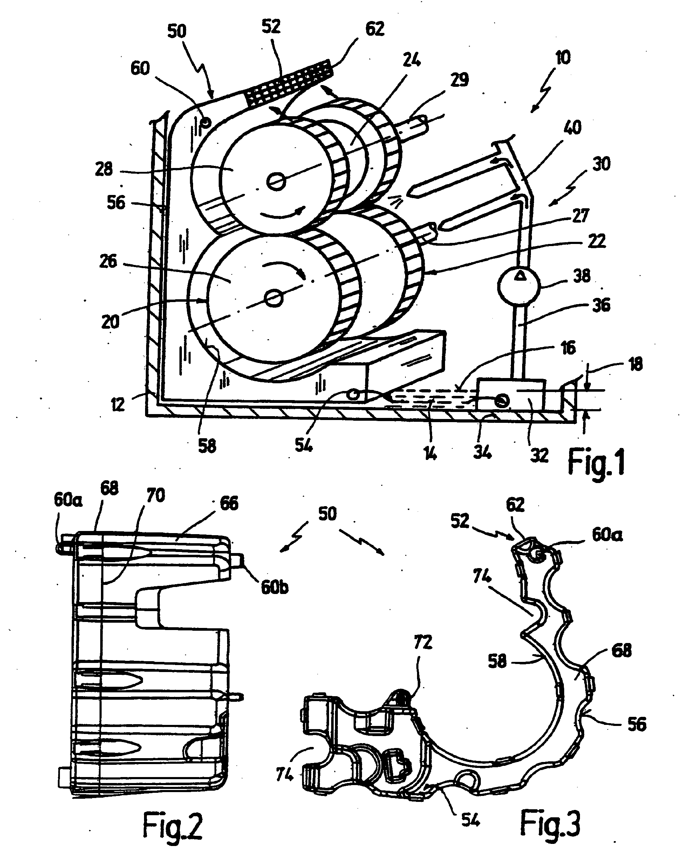

In Fig. 1 ist ein schematischer Ausschnitt eines Getriebes generell mit 10 bezeichnet.

Das Getriebe 10 weist ein fluiddichtes Gehäuse 12 auf, in dem ein Fluid aufgenommen ist. Am Boden des Gehäuses 12 ist ein Fluidsumpf 14 mit einem Fluidniveau 16 vorhanden.

Die Höhe des Fluidniveaus 16 ist bei 18 gezeigt.

Das Getriebe 10 ist für die Verwendung in Kraftfahrzeugen geeignet und kann folglich jede Art von Kraftfahrzeuggetriebe sein, wie ein Handschaltgetriebe, ein automatisiertes Schaltgetriebe, ein Doppelkupplungsgetriebe, aber auch ein Automatikgetriebe oder ein stufenloses Getriebe wie ein CVT.

Das Getriebe 10 weist in an sich bekannter Weise eine Mehrzahl von Getriebegliedern wie Zahnräder etc. auf.

In Fig. 1 sind schematisch ein erster Radsatz 20 und ein zweiter Radsatz 22 gezeigt, wie sie in Schaltgetrieben in Vorgelegebauweise üblicherweise vorgesehen sind.

Die zwei Radsätze 20, 22 werden alternativ über ein schematisch angedeutetes Schaltkupplungspaket 24 in den Kraftfluss geschaltet.

Der erste Radsatz 20 weist ein unteres Rad 26 auf, das an einer unteren Welle 27 festgelegt ist. Der Radsatz 20 weist ferner ein oberes Rad 28 auf, das an einer oberen Welle 29 drehbar gelagert ist und mit dem unteren Rad 26 in Eingriff steht.

Die Drehrichtungen der Räder 26, 28 bei Geradeausfahrt des Kraftfahrzeuges sind in Fig. 1 durch Pfeile angedeutet.

Das Getriebe 10 ist ein spritzgeschmiertes Getriebe mit einer Spritzschmiereinrichtung 30.

Die Spritzschmiereinrichtung 30 weist eine Ansaugeinrichtung 32 auf, die in dem Fluidsumpf 14 angeordnet ist.

Die Ansaugeinrichtung 32 weist eine Ansaugöffnung 34 auf, die in allen Betriebsarten des Getriebes 10 unterhalb des Fluidniveaus 16 angeordnet ist. Mit anderen Worten darf das Fluidniveau 16 nicht unter die Höhe der Ansaugöffnung 34 fallen, um zu vermeiden, dass die Ansaugeinrichtung 32 Luft ansaugt.

Die Ansaugeinrichtung 32 ist über eine Leitung 36 mit einer Pumpe 38 verbunden. Die Pumpe 38 fördert das Fluid aus dem Fluidsumpf 14 in ein Spritz-/Sprühsystem 40.

In Fig. 1 ist schematisch gezeigt, dass das Spritz-/Sprühsystem 40 beispielsweise Fluid in axiale Bohrungen von Wellen (wie bei der Welle 27) einspritzt, um beispielsweise hierüber Lager, etc. mit Schmierfluid zu versorgen. Das Spritz-/Sprühsystem 40 kann jedoch auch Fluid unmittelbar von außen auf Getriebeglieder sprühen, wie es schematisch für den Radsatz 20 gezeigt ist.

Das Getriebe 10 weist ferner einen Fluidausgleichsbehälter 50 auf. Der Fluidausgleichsbehälter 50 weist einen Fluideingang 52 auf, der im oberen Teil des Getriebes 10, jedenfalls deutlich oberhalb des Fluidniveaus 16, angeordnet ist. Ferner weist der Fluidausgleichsbehälter 50 einen Fluidausgang 54 auf, der im Bereich des Fluidsumpfes 14 angeordnet ist. Der Fluidausgang 54 kann unterhalb des Fluidniveaus 16 angeordnet sein oder auch oberhalb des Fluidniveaus 16. Sofern der Fluidausgang 54 unterhalb des Fluidniveaus 16 angeordnet ist, wird der Fluidausgleichsbehälter 50 gegebenenfalls nicht vollständig entleert.

Der Fluidausgleichsbehälter 50 weist eine an die Einbausituation in dem Getriebe 10 angepasste Form auf, mit einer Außenkontur 56, die an das Gehäuse 12 des Getriebes 10 angepasst ist, und mit einer Innenkontur 58, die an die Außenkonturen der Radsätze 20, 22 angepasst ist.

Die Innenkontur 58 kann dabei dazu dienen, von den Radsätzen wegspritzendes Fluid zu führen, und kann beispielsweise im Falle von tauchgeschmierten Systemen auch zur Bildung des Fluidsumpfes dienen.

Der Fluidausgleichsbehälter 50 wird im Betrieb auf noch näher zu beschreibende Art und Weise über den Fluideingang 52 mit Fluid gefüllt. Insbesondere ist der Fluideingang 52 so angeordnet, dass von den Radsätzen 20, 22 mitgenommenes und wegspritzendes Fluid in den Fluideingang 52 hineingeführt wird. Gegebenenfalls können in dem Getriebe 10 zusätzlich nicht näher bezeichnete Leiteinrichtungen bzw. Leitbleche vorgesehen sein, um derart wegspritzendes Fluid in den Fluideingang 52 zu leiten.

Der Fluideingang 52 erstreckt sich in axialer Richtung des Getriebes 10 über die axiale Anordnung aus den zwei Radsätzen 20, 22 und des dazwischen angeordneten Schaltkupplungspaketes 24.

Ferner ist der Fluideingang 52 signifikant größer als der Fluidausgang 54. Im Normalbetrieb des Getriebes 10, d.h. bei normalen Umgebungstemperaturen bzw. normaler Betriebstemperatur des Fluides (beispielsweise oberhalb von 20 °C), wird aufgrund des sehr großen Querschnittes des Fluideingangs 52 ständig eine größere Menge an Fluid in den Fluidausgleichsbehälter 50 hineingefördert, als über den Fluidausgang 54 abfließen kann.

Im Normalbetrieb wird der Fluidausgleichsbehälter 50 ständig nachgefüllt.

Um ein Rückströmen von Fluid über den Fluideingang 52 zu verhindern, ist im oberen Bereich des Fluidausgleichsbehälters 50 eine Überlauföffnung 60 vorgesehen. Die Überlauföffnung 60 ist unterhalb des Fluides in axialer Richtung seitlich an dem Fluidausgleichsbehälter 50 vorgesehen, um das überlaufende Fluid in geeigneter Weise abführen zu können.

Im Normalbetrieb des Getriebes wird daher ein bestimmter Anteil der Fluidmenge in dem Gehäuse 12 in dem Fluidausgleichsbehälter 50 aufgenommen. Die in dem Fluidausgleichsbehälter 50 aufgenommene Fluidmenge kann beispielsweise im Bereich von 5 % bis 30 % der gesamten Fluidmenge liegen, vorzugsweise im Bereich von 5 % bis 15 %.

Hierdurch kann im Normalbetrieb das Fluidniveau 16 gesenkt werden, so dass Getriebeglieder wie das untere Rad 26 weniger tief oder gar nicht in den Fluidsumpf 14 eintauchen. Hierdurch können im Normalbetrieb Planschverluste vermieden oder verringert werden. Der Wirkungsgrad kann folglich gesteigert werden.

Das von der Spritzschmiereinrichtung 30 im Umlauf geförderte Schmierfluid fließt im Normalbetrieb hinreichend schnell von den geschmierten Getriebegliedern wieder ab und gelangt erneut in den Fluidsumpf 14, so dass gewährleistet ist, dass das Fluidniveau 16 oberhalb der Ansaugöffnung 34 verbleibt. Hierzu trägt natürlich auch das während des normalen Betriebs ständig über den Fluidausgang 54 ausströmende Fluid bei. Das aus dem Fluidausgang 54 in den Fluidsumpf 14 ausströmende Fluid ist zudem weniger stark aufgeschäumt und entsprechend beruhigt, so dass die Effizienz der Spritzschmiereinrichtung 30 gesteigert ist.

Bei kalten Umgebungstemperaturen kann das Fluid bei Betriebsbeginn eine relativ hohe Viskosität besitzen. Dies kann dazu führen, dass über den Fluidsumpf 14 zwar Fluid von der Spritzschmiereinrichtung 30 angesaugt wird, dass jedoch das in Umlauf gekommene Fluid aufgrund der hohen Viskosität nicht schnell genug in den Fluidsumpf 14 zurückgelangt. Hierdurch besteht generell die Gefahr, dass das Fluidniveau 16 unter die Höhe der Ansaugöffnung 34 fällt. Dies hätte zur Folge, dass Luft angesaugt wird und die Schmierung zusammenbricht.

Um dies zu verhindern, weist der Fluidausgleichsbehälter 50 an seinem Fluideingang 52 Durchflussbegrenzungsmittel 62 auf.

Die Durchflussbegrenzungsmittel 62 sind dazu ausgelegt, den Durchgang von Fluid hoher Viskosität (oberhalb eines bestimmten Grenzwertes) zu begrenzen oder Fluid hoher Viskosität vollständig abzuweisen und den Durchfluss von Fluid niedriger Viskosität (wie im Normalbetrieb des Getriebes 10) zu ermöglichen.

Generell können die Durchflussbegrenzungsmittel 62 durch einen in Abhängigkeit von beispielsweise der Temperatur gesteuerten Verschluss gebildet sein. Vorzugsweise sind die Durchflussbegrenzungsmittel 62 jedoch einfache mechanische, passive Mittel ohne weitere Steuerungs- oder Ventileinrichtungen. Genauer gesagt können die Durchflussbegrenzungsmittel 62 durch ein Gitter oder eine Lochmaske gebildet sein. Die Größe der Löcher bzw. Maschen eines Gitters, die Grundviskosität des verwendeten Fluides, die Gesamtgröße des Fluideingangs 52 sowie die Querschnittsfläche des Fluidausgangs 54 können so aneinander angepasst sein, dass Fluid mit einer Viskosität unterhalb des Grenzwertes (d.h. beispielsweise Fluid, das kälter ist als 20 °C, oder kälter ist als 0 °C) von den Durchflussbegrenzungsmitteln 62 abgewiesen wird. Bei einem Gitter geeigneter Drahtstärke und Maschengröße kann gegen das Gitter spritzendes Fluid hoher Viskosität nicht oder im Wesentlichen nicht eindringen, so dass solches Fluid abgewiesen wird. Ein Befüllen des Fluidausgleichsbehälters 50 bei niedrigen Temperaturen wird dadurch verhindert. Hierdurch kann verhindert werden, dass das Fluidniveau 16 bei niedrigen Temperaturen unter die Höhe der Ansaugöffnung 34 abfällt. Damit steht auch bei niedrigen Temperaturen die gesamte Fluidmenge zur Verfügung.

Dies wird auch durch die definierte Ablauföffnung (Fluidausgang) 54 erreicht. Diese gewährleistet, dass bereits nach relativ kurzer Ruhezeit des Getriebes 10 sich das Fluidniveau 16 im Behälter 50 bis auf ein Normalfluidniveau 16 abgesenkt hat. Für Kaltstartphasen ist der Fluidsumpf 14 daher ausreichend gefüllt.

In den Figuren 2 und 3 ist eine bevorzugte Ausführungsform eines erfindungsgemäßen Fluidausgleichsbehälters 50 dargestellt. Der Fluidausgleichsbehälter 50 ist aus Kunststoff hergestellt und besteht lediglich aus zwei Behälterteilen 66, 68, die miteinander verrastet oder anderweitig mechanisch verbunden werden, vorzugsweise ohne weitere Verbindungsmittel.

Die Verbindungsebene 70 verläuft dabei vorzugsweise etwa senkrecht zu der axialen Richtung im Getriebe 10.

Neben der an die Räder von Radsätzen angepassten Innenkontur 58 kann auch die Außenkontur 56 beispielsweise an ein verripptes Getriebegehäuse 12 angepasst sein. Ferner können in dem Fluidausgleichsbehälter 50 Ausnehmungen 74 ausgebildet sein, die beispielsweise Schaltstangen oder Ähnliches umgeben. Ferner können derartige Ausnehmungen 74 auch zur formschlüssigen Fixierung des Fluidausgleichsbehälters 50 in dem Gehäuse 12 verwendet werden.

In den Figuren 2 und 3 erkennt man ferner, dass zwei Überlauföffnungen 60a, 60b an axial gegenüberliegenden Enden des Behälters 50 vorgesehen sind. Auch ist zu erkennen, dass in einem unteren Bereich (unterhalb des Fluideingangs 52, jedoch oberhalb eines Hauptvolumens des Fluidausgleichsbehälters 50) eine Entlüftungseinrichtung 72 vorgesehen sein kann.

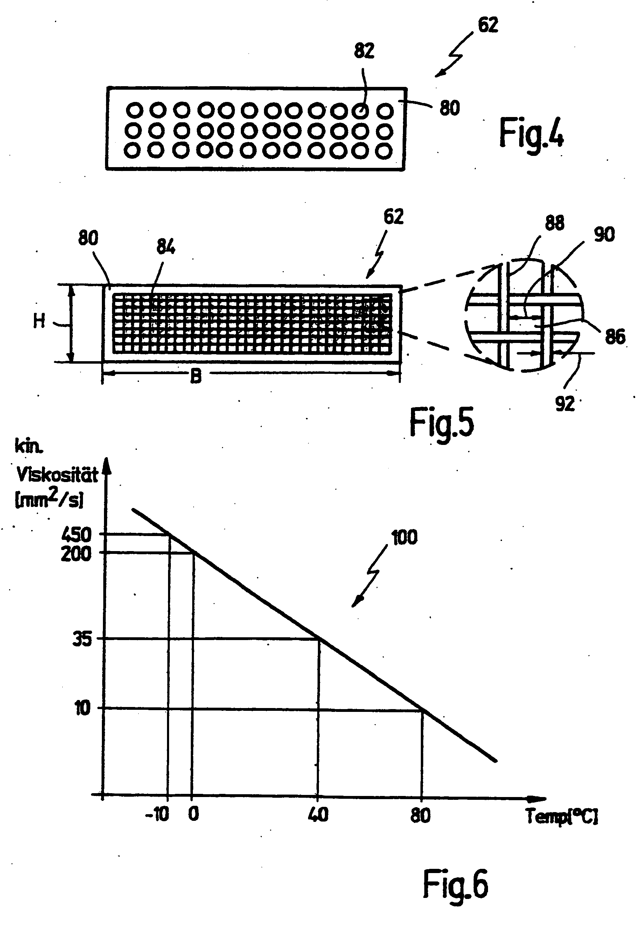

In Fig. 4 ist eine erste Ausführungsform von Durchflussbegrenzungsmitteln 62 gezeigt, mit einem Träger 80, beispielsweise in Form einer Kunststoffplatte oder eines Bleches, wobei in dem Träger 80 eine Mehrzahl von Löchern 82 vorgesehen ist.

In Fig. 5 ist eine weitere Ausführungsform von Durchflussbegrenzungsmitteln 62 vorgesehen, wobei in einem Träger 80 ein Gitter 84 angeordnet ist. Das Gitter 84 ist ein Drahtgeflechtgitter aus einem Draht 88, der beispielsweise quadratische Maschen 86 bildet.

Die Maschenweite ist in Fig. 5 bei 90 gezeigt. Die Drahtdicke ist in Fig. 5 bei 92 gezeigt.

Bei einem bevorzugten Ausführungsbeispiel beträgt die Drahtdicke 92 0,3 mm, und die Maschenweite 90 beträgt 0,8 mm.

Die Breite B des Gitters 84 kann beispielsweise im Bereich von 80 bis 120 mm liegen, im vorliegenden Fall etwa 100 mm.

Die Höhe H des Gitters 84 kann beispielsweise 11 bis 12 mm betragen.

Der Durchmesser des Fluidausgangs 54 kann beispielsweise 1,5 mm betragen, mit einer entsprechenden Querschnittsfläche von etwa 1,8 mm².

Die Öffnung des Fluideingangs 52 kann insgesamt im Bereich von etwa 600 bis 2000 mm² liegen, im vorliegenden Fall beispielsweise 1145 mm². Die Gesamtfläche der Maschen 86 kann beispielsweise im Bereich von 300 bis 1500 mm² liegen, im vorliegenden Fall ca. 600 mm².

Das Verhältnis von Gesamtfläche der Einlauföffnung (des Fluideingangs) 52 zu Maschenfläche kann beispielsweise im Bereich von 1:1 bis 1:3 liegen, vorzugsweise im Bereich von etwa 1:2.

Die Überlauföffnungen 60a, 60b können beispielsweise einen Durchmesser von 5 mm besitzen.

Die Dicke 92 des Drahtes 88 kann beispielsweise 0,3 mm betragen, die Maschenweite 90 ca. 0,8 mm.

In Fig. 6 ist ein in Verbindung mit einem oben spezifizierten Fluidausgleichsbehälter 50 vorzugsweise verwendetes Fluid charakterisiert, und zwar durch ein Viskositäts-Temperatur-Diagramm 100.

Die kinematische Viskosität des Fluides liegt bei 40 °C bei 35, bei 80 °C bei ca. 10, bei 0 °C bei ca. 200 und bei -10 °C bei ca. 450.

Bei der Kombination eines solchen Fluides mit einem Fluidausgleichsbehälter 50, der mit Durchflussbegrenzungsmitteln 62 nach der Art der Fig. 5 ausgestattet ist, kann der Fluidausgleichsbehälter 50 bei Fluid-Temperaturen (> 20 °C) innerhalb von etwa 60 bis 500 sec befüllt werden.

Bei Fluid-Temperaturen < 20 °C wird der Fluidbehälter hingegen gar nicht befüllt; das bei dieser Temperatur relativ hochviskose Fluid wird vielmehr von dem Gitter 84 abgewiesen.

Bei sehr hohen Fluid-Temperaturen kann die Füllzeit auch deutlich niedriger liegen.

Der Durchmesser des Fluidausgangs 54 ist so gewählt, dass das Fluid aus dem Fluidausgleichsbehälter 50 bei normalen Fluid-Temperaturen (d.h. oberhalb von 20 °C) innerhalb von etwa 200 bis 300 sec (maximal) abfließt.

Bevorzugt ist insgesamt jedoch, dass bei Normalbetrieb, d.h. bei Fluid-Temperaturen oberhalb von 20 °C bzw. deutlich oberhalb von 20 °C, die über das Gitter 84 einströmende Fluidmenge größer ist als die über den Fluidausgang 54 abfließende Fluidmenge. Hierdurch wird im Normalbetrieb gewährleistet, dass der Fluidausgleichsbehälter 50 immer gefüllt ist.

## Patentansprüche

1. Fluidausgleichsbehälter (50) zur Anordnung in einem Gehäuse (12) eines Getriebes (10), wobei der Fluidausgleichsbehälter (50) wenigstens einen Fluideingang (52) zur Aufnahme von Fluid in den Fluidausgleichsbehälter (50) und wenigstens einen Fluidausgang (54) zur Abgabe von Fluid aufweist, wobei der Fluideingang (52) größer ist als der Fluidausgang (54), so dass der Fluidausgleichsbehälter (50) im Normalbetrieb gefüllt ist, um das Fluidniveau (16) in dem Gehäuse (12) zu senken, wobei an dem Fluideingang (52) von der Viskosität des Fluides abhängige Durchflussbegrenzungsmittel (62) angeordnet sind, die den Durchfluss von Fluid in den Fluidausgleichsbehälter (50) hinein begrenzen, so dass das Fluidniveau (16) weniger abgesenkt wird, wenn die Viskosität des Fluides einen bestimmten Grenzwert überschreitet,
**dadurch gekennzeichnet, dass**
die Durchflussbegrenzungsmittel (62) einen den Fluideingang (52) überdeckenden Träger (80) aufweisen, in dem eine Vielzahl von Löchern (82; 86) ausgebildet ist.

2. Fluidausgleichsbehälter nach Anspruch 1, **dadurch gekennzeichnet, dass** das Verhältnis der Durchflussmengen pro Zeiteinheit bei normaler Viskosität des Fluides im Normalbetrieb bzw. bei Überschreiten des Grenzwertes größer als 10:1, insbesondere größer als 100:1 ist.

3. Fluidausgleichsbehälter nach Anspruch 1 oder 2, **dadurch gekennzeichnet, dass** die Durchflussbegrenzungsmittel (62) und das verwendete Fluid so aneinander angepasst sind, dass der Durchfluss von Fluid in den Fluidausgleichsbehälter (50) hinein bei Überschreiten des Grenzwertes auf Null oder nahezu Null begrenzt ist.

4. Fluidausgleichsbehälter nach einem der Ansprüche 1 bis 3, **dadurch gekennzeichnet, dass** die Durchflussbegrenzungsmittel (62) ein Gitter (84) aufweisen, dessen Maschen (86) die Löcher bilden.

5. Fluidausgleichsbehälter nach Anspruch 4, **dadurch gekennzeichnet, dass** das Gitter (84) als Drahtgitter ausgebildet ist, wobei die Dicke (92) des Drahtes (88) im Bereich von 0,05 mm bis 3 mm liegt, insbesondere im Bereich von 0,1 mm bis 1 mm.

6. Fluidausgleichsbehälter nach einem der Ansprüche 1 bis 5, **dadurch gekennzeichnet, dass** die Löcher (82; 86) eine Größe im Bereich von 0,1 mm² bis 4 mm², insbesondere im Bereich von 0,4 mm² bis 2 mm² aufweisen.

7. Fluidausgleichsbehälter nach einem der Ansprüche 1 bis 6, **dadurch gekennzeichnet, dass** die Summe der Querschnittsflächen der Löcher (82; 86) wenigstens 10-flach, insbesondere wenigstens 100-fach größer ist als die Querschnittsfläche des Fluidausgangs (54).

8. Fluidausgleichsbehälter nach einem der Ansprüche 1 bis 7, **dadurch gekennzeichnet, dass** die Querschnittsfläche des Fluideingangs (52) im Bereich von 100 mm² bis 2000 mm² liegt.

9. Fluidausgleichsbehälter nach einem der Ansprüche 1 bis 8, **dadurch gekennzeichnet, dass** die Querschnittsfläche des Fluidausgangs (54) im Bereich von 0,25 mm² bis 25 mm², insbesondere im Bereich von 0,5 mm² bis 5 mm² liegt.

10. Fluidausgleichsbehälter nach einem der Ansprüche 1 bis 9, **dadurch gekennzeichnet, dass** der Fluidausgleichsbehälter (50) aus Kunststoff hergestellt ist.

11. Fluidausgleichsbehälter nach einem der Ansprüche 1 bis 10, **dadurch gekennzeichnet, dass** der Fluidausgleichsbehälter (50) wenigstens zwei Teile (66, 68) aufweist, die ohne eine separate Dichtung dazwischen mechanisch miteinander verbunden sind.

12. Getriebe (10) für Kraftfahrzeuge, mit einem Gehäuse (12), wenigstens einem in dem Gehäuse (12) beweglich gelagerten Getriebeglied (26, 28) und einem Fluidausgleichsbehälter (50), wobei das Gehäuse (12) zur Aufnahme von Schmierfluid ausgelegt ist, das am Boden des Gehäuses (12) einen Fluidsumpf (14) bildet, wobei im Normalbetrieb des Getriebes (10) ein Teil des Fluides über einen Fluideingang (52) in dem Fluidausgleichsbehälter (50) aufgenommen wird, um das Fluidniveau (16) des Fluidsumpfes (14) abzusenken und hierdurch Planschverluste zu verringern,
**gekennzeichnet durch** einen Fluidausgleichsbehälter (50) nach einem der Ansprüche 1 bis 11.

13. Getriebe nach Anspruch 12, **dadurch gekennzeichnet, dass** das wenigstens eine Getriebeteil (26, 28) über eine Spritzschmiereinrichtung (30) geschmiert ist, die Fluid aus dem Fluidsumpf (14) ansaugt und über eine Pumpe (38) dem Getriebeteil (26, 28) zuführt.

## Claims

1. Fluid expansion tank (50) for arrangement in a housing (12) of a transmission (10), wherein the fluid expansion tank (50) comprises at least one fluid inlet (52) for taking up fluid into the fluid expansion tank (50) and at least one fluid outlet (54) for dispensing fluid, wherein the fluid inlet (52) is larger than the fluid outlet (54) so that the fluid expansion tank (50) is filled during normal operation, in order to lower the fluid level (16) in the housing (12), wherein flow limitation means (62) are arranged at the fluid inlet (52), which fluid limitation means (62) depend on the viscosity of the fluid and limit the flow of fluid into the fluid expansion tank (50) such that the fluid level (16) is lowered less if the viscosity of the fluid exceeds a predetermined threshold,
**characterized in that**
the flow limitation means (62) comprise a carrier (80) which covers the fluid inlet (52), wherein a plurality of holes (82; 86) is formed in the carrier (80).

2. Fluid expansion tank according to claim 1, **characterized in that** the ratio of flow throughputs per time unit at normal viscosity of the fluid during normal operation and when exceeding the threshold, respectively, is larger than 10:1, particularly larger than 100:1.

3. Fluid expansion tank according to claim 1 or 2, **characterized in that** the flow limitation means (62) and the fluid used are adapted to each other such that the flow of fluid into the fluid expansion tank (50) is limited to zero or approximately zero when exceeding the threshold.

4. Fluid expansion tank according to any of claims 1 to 3, **characterized in that** the flow limitation means (62) comprise a grid (84), the meshes (86) of which form the holes.

5. Fluid expansion tank according to claim 4, **characterized in that** the grid (84) is formed as a wire grid, wherein the thickness (92) of the wire (88) is in the range from 0.05 mm to 3 mm, particularly in the range from 0.1 mm to 1 mm.

6. Fluid expansion tank according to any of claims 1 to 5, **characterized in that** the holes (82; 86) have a size in the range from 0.1 mm² to 4 mm², particularly in the range from 0.4 mm² to 2 mm².

7. Fluid expansion tank according to any of claims 1 to 6, **characterized in that** the sum of the cross-sectional areas of the holes (82; 86) is at least 10-times, particularly at least 100-times larger than the cross-sectional area of the fluid outlet (54).

8. Fluid expansion tank according to any of claims 1 to 7, **characterized in that** the cross-sectional area of the fluid inlet (52) is in the range from 100 mm² to 2000 mm².

9. Fluid expansion tank according to any of claims 1 to 8, **characterized in that** the cross-sectional area of the fluid outlet (54) is in the range from 0.25 mm² to 25 mm², particularly in the range from 0.5 mm ² to 5 mm².

10. Fluid expansion tank according to any of claims 1 to 9, **characterized in that** the fluid expansion tank (50) is made of plastic.

11. Fluid expansion tank according to any of claims 1 to 10, **characterized in that** the fluid expansion tank (50) comprises at least two parts 66, 68) which are mechanically joined to each other without a separate sealing therebetween.

12. Transmission (10) for motor vehicles, comprising a housing (12), at least one transmission member (26, 28) movably supported in the housing (12), and a fluid expansion tank (50), wherein the housing (12) is adapted to receive lubricating fluid that forms a fluid sump (14) at the bottom of the housing (21), wherein a portion of the fluid is taken up in the fluid expansion tank (50) via a fluid inlet (52) thereof during normal operation of the transmission (10), in order to lower the fluid level (16) of the fluid sump (14) and avoid splashing losses thereby,
**characterized by** a fluid expansion tank (50) according to any of claims 1 to 11.

13. Transmission according to claim 12, **characterized in that** at least one transmission part (26, 28) is lubricated by means of an injection lubricating device (30) which sucks fluid from the fluid sump (14) and delivers the fluid via a pump (38) to the transmission part (26, 28).

## Revendications

1. Réservoir de compensation de fluide (50) à disposer dans un carter (12) d'une transmission (10), sachant que le réservoir de compensation de fluide (50) présente au moins une entrée de fluide (52) pour recevoir du fluide dans le réservoir de compensation de fluide (50) et au moins une sortie de fluide (54) pour délivrer du fluide, sachant que l'entrée de fluide (52) est plus grande que la sortie de fluide (54), de sorte que le réservoir de compensation de fluide (50) est rempli en fonctionnement normal, afin d'abaisser le niveau de fluide (16) dans le carter (12), sachant que des moyens (62) de limitation de l'écoulement en fonction de la viscosité du fluide sont disposés à l'entrée de fluide (52), moyens qui limitent l'écoulement de fluide dans le réservoir de compensation de fluide (50), de sorte que le niveau de fluide (16) est moins abaissé lorsque la viscosité du fluide dépasse une valeur limite déterminée,
**caractérisé en ce que** les moyens (62) de limitation de l'écoulement présentent au moins un support (80), qui recouvre l'entrée de fluide (52) et dans lequel est formée une pluralité de trous (82 ; 86).

2. Réservoir de compensation de fluide selon la revendication 1, **caractérisé en ce que** le rapport des débits d'écoulement par unité de temps pour une viscosité normale du fluide en fonctionnement normal et en cas de dépassement de la valeur limite est supérieur à 10:1, en particulier est supérieur à 100:1.

3. Réservoir de compensation de fluide selon la revendication 1 ou 2, **caractérisé en ce que** les moyens (62) de limitation de l'écoulement et le fluide utilisé sont mutuellement adaptés de telle sorte que l'écoulement de fluide dans le réservoir de compensation de fluide (50) est limité à zéro ou quasiment à zéro en cas de dépassement de la valeur limite.

4. Réservoir de compensation de fluide selon l'une des revendications 1 à 3, **caractérisé en ce que** les moyens (62) de limitation de l'écoulement présentent une grille (84) dont les mailles (86) forment les trous.

5. Réservoir de compensation de fluide selon la revendication 4, **caractérisé en ce que** la grille (84) est réalisée sous forme de grille métallique, sachant que l'épaisseur (92) du fil métallique (88) est comprise entre 0,05 mm et 3 mm, en particulier est comprise entre 0,1 mm et 1 mm.

6. Réservoir de compensation de fluide selon l'une des revendications 1 à 5, **caractérisé en ce que** les trous (82 ; 86) présentent une taille comprise entre 0,1 mm² et 4 mm², en particulier entre 0,4 mm² et 2 mm².

7. Réservoir de compensation de fluide selon l'une des revendications 1 à 6, **caractérisé en ce que** la somme des superficies de section des trous (82 ; 86) est au moins 10 fois supérieure, en particulier au moins 100 fois supérieure, à la superficie de section de la sortie de fluide (54).

8. Réservoir de compensation de fluide selon l'une des revendications 1 à 7, **caractérisé en ce que** la superficie de section de l'entrée de fluide (52) est comprise entre 100 mm² et 2000 mm².

9. Réservoir de compensation de fluide selon l'une des revendications 1 à 8, **caractérisé en ce que** la superficie de section de la sortie de fluide (54) est comprise entre 0,25 mm² et 25 mm², en particulier entre 0,5 mm² et 5 mm².

10. Réservoir de compensation de fluide selon l'une des revendications 1 à 9, **caractérisé en ce que** le réservoir de compensation de fluide (50) est réalisé en matière plastique.

11. Réservoir de compensation de fluide selon l'une des revendications 1 à 10, **caractérisé en ce que** le réservoir de compensation de fluide (50) présente au moins deux parties (66, 68), qui sont assemblées mécaniquement entre elles sans joint d'étanchéité intermédiaire séparé.

12. Transmission (10) pour des véhicules automobiles, avec un carter (12), au moins un organe de transmission (26, 28) monté à déplacement dans le carter (12), et un réservoir de compensation de fluide (50), sachant que le carter (12) est conçu pour recevoir du fluide de lubrification qui forme un dépôt de fluide (14) sur le fond du carter (12), sachant qu'en fonctionnement normal de la transmission (10), une partie du fluide est reçue par l'intermédiaire d'une entrée de fluide (52) dans le réservoir de compensation de fluide (50), afin d'abaisser le niveau de fluide (16) du dépôt de fluide (14) et de réduire ainsi les pertes par barbotage,
**caractérisée par** un réservoir de compensation de fluide (50) selon l'une des revendications 1 à 11.

13. Transmission selon la revendication 12, **caractérisée en ce que** l'élément de transmission au moins unique (26, 28) est lubrifié au moyen d'un dispositif (30) de lubrification par barbotage, qui aspire du fluide à partir du dépôt de fluide (14) et l'apporte à l'élément de transmission (26, 28) au moyen d'une pompe (38).
